# EUROPEAN PATENT APPLICATION

(11) **EP 4 335 632 A1**
(43) Date of publication of application: **13.03.2024**
(21) Application number: 23192438.2
(22) Date of filing: 21.08.2023
(51) Int. Cl.: B29D 30/06

(54) **PNEUMATIC TIRE MANUFACTURING METHOD AND PNEUMATIC TIRE MANUFACTURING APPARATUS**

(30) Priority: 12.09.2022 JP 2022144472
(71) Applicant: Toyo Tire Corporation, Itami-shi, Hyogo 664-0847 (JP)
(72) Inventor: Shibano, Toshiharu, Hyogo, 664-0847 (JP); Kato, Yuichi, Hyogo, 664-0847 (JP)
(74) Representative: Hannke Bittner & Partner mbB Regensburg

(57) **Abstract**

The invention is related to a pneumatic tire manufacturing method having: measuring a shape of a tire inner surface; and forming a sealant layer (10) on the tire inner surface by applying a band-like sealant (11) discharged from an orifice (45) of a nozzle (41) to the tire inner surface (1A) while the nozzle (41) which is directed toward the tire inner surface is caused to be in relative rotation about the axis of the tire. The sealant (11) discharged from the orifice (45) of the nozzle is applied to the tire inner surface in such a manner that an angle of the nozzle (41) with respect to a tire radial direction is varied according to a slope of the tire inner surface (1A) as viewed in a meridional section of the tire. The invention is also related to a pneumatic tire manufacturing apparatus (30).

## Description

### TECHNICAL FIELD

The present disclosure relates to a pneumatic tire manufacturing method and to a pneumatic tire manufacturing apparatus.

### BACKGROUND ART

Known as a pneumatic tire provided with puncture-resistant functionality is a pneumatic tire (also referred to as a sealant tire) that is provided with a sealant layer at which sealant is applied from a nozzle at the tire inner surface. At a sealant tire, the through-hole which is formed at the time of puncture is automatically plugged by sealant, making it possible to prevent escape of air from the tire.

Patent Reference No. 1 discloses art in which distance between the nozzle tip and the tire inner surface is measured by a displacement sensor, and the distance between the nozzle tip and the tire inner surface is controlled so as to be a prescribed distance.

### PRIOR ART REFERENCES

### PATENT REFERENCES

Patent Reference No. 1: Japanese Patent Application Publication Kokai No. 2016-78690

### SUMMARY OF INVENTION

### PROBLEM TO BE SOLVED BY INVENTION

However, where, as is the case at Patent Reference No. 1, there is only control of the distance between the nozzle tip and the tire inner surface, there are situations in which curvature of the tire inner surface at outer portions in the tire axial direction of the tread is greater than at central portions in the tire axial direction thereof, which may cause occurrence of gaps between band-like regions of sealant that are mutually adjacent in the tire axial direction.

The present disclosure provides a pneumatic tire manufacturing method and a pneumatic tire manufacturing apparatus such as will permit reduced occurrence of gaps in a sealant layer formed at a tire.

### MEANS FOR SOLVING PROBLEM

According of the present disclosure, there is provided a pneumatic tire manufacturing method having the steps of: measuring a shape of a tire inner surface; and forming a sealant layer on the tire inner surface by applying a band-like sealant discharged from an orifice of a nozzle to the tire inner surface while the nozzle which is directed toward the tire inner surface is caused to be in relative rotation about the axis of the tire; wherein the sealant discharged from the orifice of the nozzle is applied to the tire inner surface in such a manner that an angle of the nozzle with respect to a tire radial direction is varied according to a slope of the tire inner surface as viewed in a meridional section of the tire.

According of the present disclosure, there is provided a pneumatic tire manufacturing apparatus having a support apparatus which supports a tire; a nozzle which is capable of discharging a bank-like sealant from an orifice; and a sensor which is capable of measuring a shape; wherein he band-like sealant is discharged from an orifice of the nozzle to the tire inner surface while the nozzle which is directed toward the tire inner surface is caused to be in relative rotation about the axis of the tire; the sensor measure the shape of the tire inner surface; and the sealant discharged from the orifice of the nozzle is applied to the tire inner surface in such a manner that an angle of the nozzle with respect to a tire radial direction is varied according to a slope of the tire inner surface as viewed in a meridional section of the tire.

### BRIEF DESCRIPTION OF DRAWINGS

[FIG. 1] Tire meridional section showing a tire.
[FIG. 2] Drawing showing constitution of a tire manufacturing apparatus for forming a sealant layer and manufacturing a sealant tire.
[FIG. 3] Side view showing operation in which sealant is applied.
[FIG. 4] Schematic plan view for explaining constitution of application of sealant.
[FIG. 5] Tire meridional section showing the situation to only one side of the tire equatorial plane.
[FIG. 6] Drawing showing the situation that would exist when a tire is cut parallel to a plane intersected by the tire axial direction.
[FIG. 7] Drawing showing the situation that would exist when a tire is cut along the tire equatorial plane.
[FIG. 8] Drawing for explaining the situation related to a plurality of measurement points representing the shape of a tire inner surface as detected by a sensor.
[FIG. 9] Drawing showing positional relationship among a nozzle, the pitch at which the nozzle is fed, and the shape of the tire inner surface.
[FIG. 10] Drawing showing how a plurality of measurement points present within an infinitesimal region among the plurality of measurement points group data shown in FIG. 8 might be extracted.
[FIG. 11] Drawing showing the shape of a tire inner surface as viewed in each of two tire meridional sections taken at mutually different locations in the tire circumferential direction.
[FIG. 12] Drawing for explaining the situation related to approximate line(s) representing a tire inner surface identified based on measurement data for the tire inner surface at which data substitution has been carried out.
[FIG. 13] Drawing for explaining the situation related to operation of a nozzle.

### EMBODIMENTS FOR CARRYING OUT INVENTION

Below, an embodiment in accordance with the present disclosure is described with reference to the drawings.

A pneumatic tire in accordance with the present embodiment is a sealant tire provided with a sealant layer 10 at which sealant 11 is applied in band-like and parallel fashion with respect to the tire circumferential direction CD to the tire inner surface 1A. Tire 1 is a so-called tubeless tire, being used in a state in which the interior thereof is filled with air or other such gas.

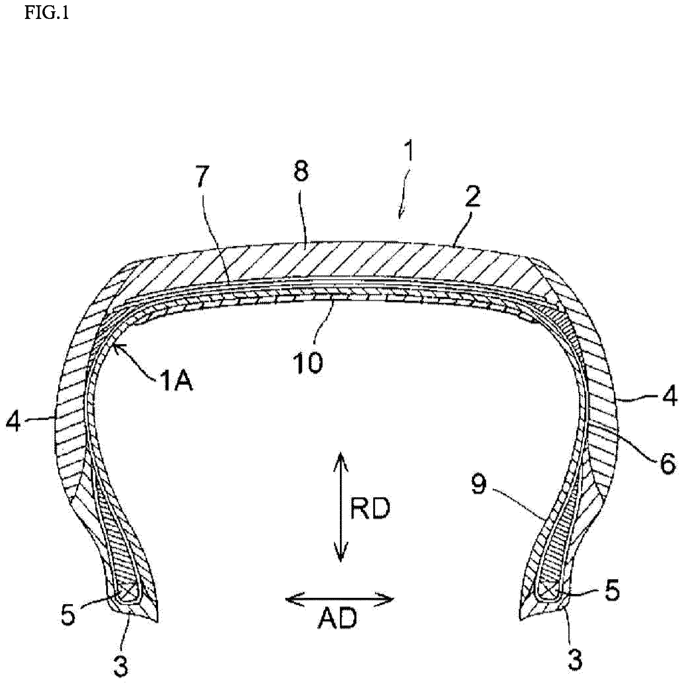

FIG. 1 is a tire meridional section showing tire 1. Tire 1 comprises annular tread 2 that contacts the road surface; a pair of, i.e., left and right, bead regions 3, 3 located toward the interior in the tire radial direction RD from tread 2; and a pair of, i.e., left and right, sidewalls 4, 4 located between bead regions 3, 3 and tread 2. Tire 1 comprises bead core 5 embedded in bead region 3; carcass ply 6 extending toroidally between left and right bead regions 3, 3; tread rubber 8 and belt 7 provided toward the outside circumference from carcass ply 6 at tread 2; innerliner 9 provided toward the tire inner surface from carcass ply 6; and sealant layer 10 provided toward the tire inner surface from innerliner 9.

Sealant layer 10 is provided in layered fashion toward the interior from tire inner surface 1A, and more specifically toward the interior from innerliner 9. In accordance with the present example, sealant layer 10 is provided, at tire inner surface 1A at tread 2, from one end in the tire axial direction AD of tire inner surface 1A to the other end thereof. It is preferred that sealant layer 10 thus be provided across the entire expanse of the inner surface of tread 2; and while it may be provided only at the inner surface of tread 2, it may be provided across a wider area that includes the inner surface of tread 2. That is, it is preferred that sealant layer 10 be provided at a region of tire inner surface 1A that includes the inner surface of tread 2.

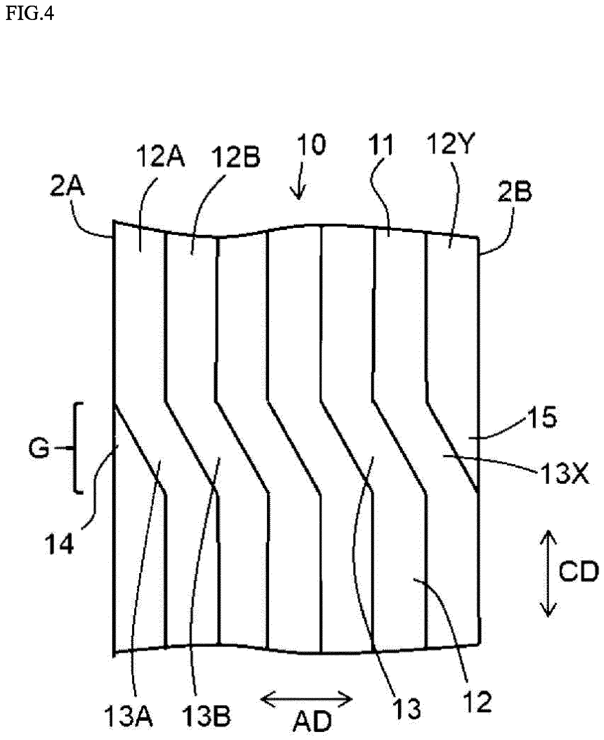

Here, what is referred to as the tire radial direction RD indicates a direction perpendicular to the rotational axis of the tire, what is referred to as toward the interior in the tire radial direction RD means in a direction so as to be nearer the rotational axis of the tire, and what is referred to as toward the exterior in the tire radial direction RD means in a direction so as to be farther from the rotational axis of the tire. What is referred to as the tire axial direction AD, which is also called the tire width direction, is a direction parallel to the rotational axis of the tire. What is referred to as the tire circumferential direction CD (see FIG. 4) is a direction along a circumference centered on the rotational axis of the tire.

At a tire manufacturing method in accordance with the first embodiment, sealant layer 10 is formed at vulcanized tire inner surface 1A by causing sealant 11 (see FIG. 4) to be continuously applied in band-like fashion along the tire circumferential direction CD as displacement is made to occur from one side in the tire axial direction AD to the other side therein to manufacture tire 1 provided with sealant layer 10.

There is no particular limitation with respect to the method by which the vulcanized tire is manufactured, it being possible to employ known methods therefor. That is, bead core(s) 5, carcass ply or plies 6, belt(s) 7, as well as tread rubber(s) 8 and/or other such constituent members of the tire might be used to fabricate a green tire (unvulcanized tire), and the green tire which is obtained might be vulcanized and molded to obtain a vulcanized tire. In addition, following vulcanization and molding of the green tire, sealant 11 would be used to form sealant layer 10.

There is no particular limitation with respect to sealant 11, it being possible to employ known sealants 11 thereas. A tacky rubber material might ordinarily be used as sealant 11. More specifically, while a rubber composition having butyl-type rubber and/or ethylene propylene diene rubber as rubber component(s), together with which liquid rubber, plasticizer, filler, crosslinking agent (organic peroxide), crosslinking agent activator (vulcanization accelerator), and/or the like are blended, might, for example, be employed, there is no limitation with respect thereto. As butyl-type rubber, besides butyl rubber, brominated butyl rubber, chlorinated butyl rubber, and other such halogenated butyl rubbers may be cited as examples.

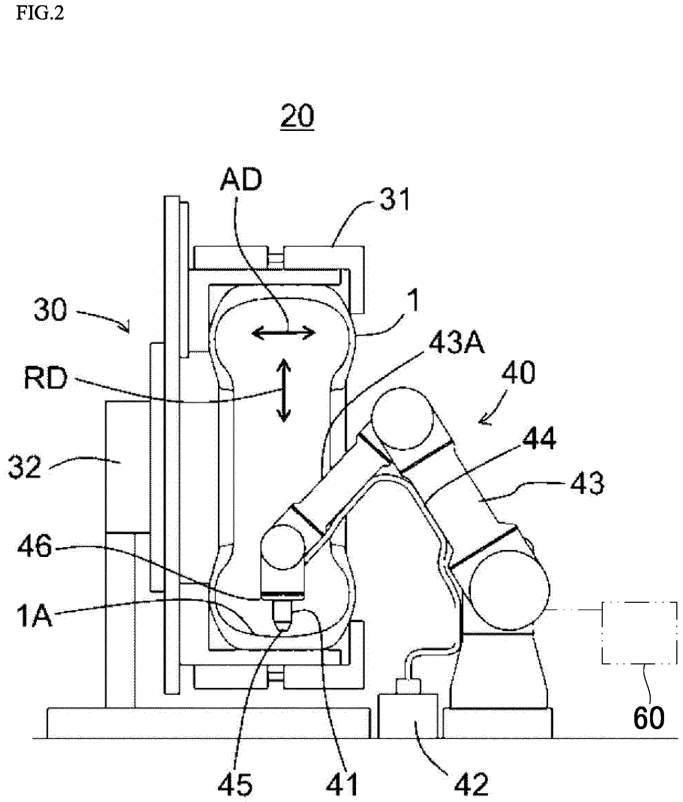

FIG. 2 is a drawing showing the constitution of tire manufacturing apparatus 20 for forming sealant layer 10 and manufacturing a sealant tire, the situation that would exist when tire 1 is cut being shown. Tire manufacturing apparatus 20 comprises support apparatus 30 which supports tire 1; discharger 40 which discharges sealant 11; a controller 60 which controls operations for causing sealant layer 10 to be formed by discharger 40 and support apparatus 30; and sensor 50 (not shown in FIG. 2) which is capable of measuring shape.

In accordance with this example, support apparatus 30 comprises outside circumference support unit 31 that supports the outside circumference of tire 1 so as to cause the rotational axis of the tire is horizontal; and drive apparatus 32 that causes tire 1, as it is being supported, to rotate about the rotational axis of the tire. While there is no limitation with respect hereto, note, however, that outside circumference support unit 31 might, for example, support the outside circumference of tire 1 so as to cause the rotational axis of the tire to be inclined with respect to the horizontal direction.

discharger 40 comprises nozzle 41 which discharges sealant 11; supply apparatus 42 which supplies sealant 11 to nozzle 41; and movement apparatus 43 which causes nozzle 41 to move.

Supply apparatus 42, which is an apparatus that causes sealant 11 that has been heated to be supplied to nozzle 41 by way of supply pipe 44, might, for example, be constituted by a fixed displacement pump such as a gear pump.

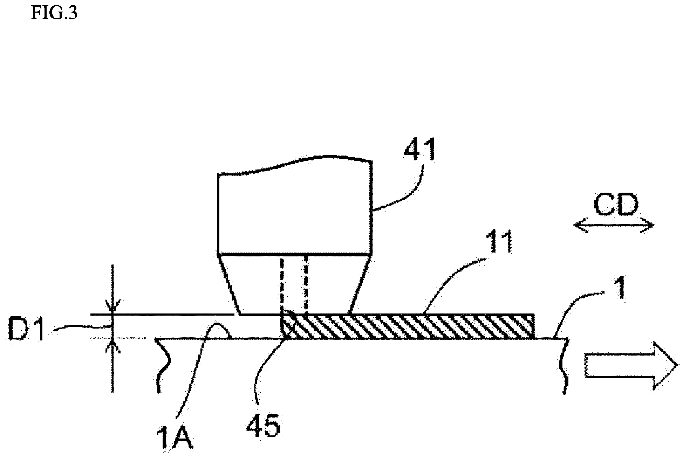

Nozzle 41 is a member which discharges sealant 11 that has been supplied thereto from supply apparatus 42, orifice 45, from which sealant 11 is discharged, being present at the tip of nozzle 41, as shown in FIG. 3. Nozzle 41 is a die (mouthpiece) that discharges sealant 11 so as to be of prescribed cross-sectional shape, orifice 45 being an opening which is formed in nozzle 41. While not shown in the drawings, orifice 45 may open in slot-like fashion such that it is a slender rectangular opening. Where this is the case, orifice 45 might have a long direction which is parallel to the long sides thereof, and a width direction which is perpendicular to the long direction. While there is no particular limitation with respect thereto, the dimension in the long direction of orifice 45 might, for example, be 10 mm to 20 mm. While there is no particular limitation with respect thereto, the dimension in the width direction of orifice 45 might, for example, be 2 mm to 5 mm. Note that the shape of orifice 45 may be any of various shapes.

Movement apparatus 43 in accordance with this example is constituted from a multiaxial robot having degrees of freedom in at least three axes, nozzle 41 being attached to the tip of arm 43A thereof. Movement apparatus 43 causes nozzle 41 to be arranged within tire 1, and causes orifice 45 of nozzle 41 to be arranged so as to be directed downward.

In accordance with the first embodiment, distance D1 between tire inner surface 1A and orifice 45 is chosen so as to be not greater than the dimension in the width direction of orifice 45. As shown in FIG. 3, movement apparatus 43 causes nozzle 41 to move within tire 1 in such fashion that orifice 45, i.e., the bottom of nozzle 41, is arranged so as to oppose tire inner surface 1A. By so doing, it will be possible to cause the thickness of sealant 11 which is discharged from orifice 45 to be easily regulated by means of the gap between tire inner surface 1A and orifice 45 regardless of the orientation of orifice 45 as it is rotated thereabout as will be described below, and it will be possible to cause sealant 11 of thickness corresponding to the aforesaid distance D1 to be formed in band-like fashion on tire inner surface 1A.

Where sealant 11 of thickness corresponding to the aforesaid distance D1 is thus formed on tire inner surface 1A, it is preferred that the amount which is discharged from nozzle 41 be controlled by means of a gear pump, for example. More specifically, because the thickness of sealant 11 which is formed on tire inner surface 1A corresponds to the aforesaid distance D1, and because the width of said sealant 11 corresponds to the dimension in the long direction of orifice 45, it is preferred that the gear pump be controlled so as to cause the product of "distance D1 (mm)," "the dimension in the long direction of orifice 45 (mm)," and "the rotational speed of tire inner surface 1A with respect to nozzle 41; i.e., the relative speed therebetween (mm/second)" to be "the discharged amount per unit time (mm³/second)."

Nozzle 41 is made to move in the tire radial direction RD and in the tire axial direction AD by movement apparatus 43. Furthermore, nozzle 41 is such that the angle thereof with respect to the tire radial direction RD is capable of being varied by movement apparatus 43. As a result, nozzle 41 can be made to move in the tire axial direction AD while causing a constant distance D1 to be maintained and causing orifice 45 to be arranged so as to oppose tire inner surface 1A as it follows the curvature of tread 2.

Provided at movement apparatus 43 is nozzle rotating apparatus 46 which causes nozzle 41 to rotate. Nozzle rotating apparatus 46 is provided at the tip of arm 43A, nozzle 41 being attached to arm 43A by way of nozzle rotating apparatus 46. The constitution is such that when nozzle 41 is made to rotate, orifice 45 which is at the tip thereof is made to rotate.

When tire manufacturing apparatus 20 is used to manufacture tire 1, vulcanized tire 1 is arranged on support apparatus 30, nozzle 41 of discharger 40 is made to move within tire 1, and orifice 45 is arranged so as to oppose tire inner surface 1A. At such time, in accordance with this example, to cause sealant layer 10 to be provided, at the inner surface of tread 2, from one end in the tire axial direction AD of tire inner surface 1A to the other end thereof, nozzle 41 is arranged so as to oppose tire inner surface 1A at said one end.

Then, drive apparatus 32 is made to cause tire 1 to rotate, and, as nozzle 41 is made to move relative thereto along the tire circumferential direction CD, supply apparatus 42 causes sealant 11 to be supplied to nozzle 41, and sealant 11 is discharged from orifice 45 of nozzle 41, to cause sealant 11 to be applied in band-like fashion to tire inner surface 1A along the tire circumferential direction CD. More specifically, as shown in FIG. 3, sealant 11 is formed in band-like fashion on tire inner surface 1A after having passed through the gap between tire inner surface 1A and the bottom of nozzle 41 which is opposed thereto.

As sealant 11 is thus applied along the tire circumferential direction CD, movement apparatus 43 causes nozzle 41 to progressively move in the tire axial direction AD. As a result, sealant 11 discharged from orifice 45 is continuously applied along the tire circumferential direction CD as displacement is made to occur from one side in the tire axial direction AD to the other side therein, application thereof being such that there is no occurrence of gaps between adjacent sections of sealant 11, 11 in the tire axial direction AD, to cause formation of sealant layer 10.

At such time, nozzle 41 may be made to move at constant speed in the tire axial direction AD so as to cause application (helical application) in which sealant 11 is helically arranged in band-like fashion such that the orientation thereof is inclined slightly with respect to the tire circumferential direction CD.

In a preferred embodiment, as shown in FIG. 4, sealant 11 may be applied in band-like and parallel fashion with respect to the tire circumferential direction CD, such that with each circumferential pass during application thereof, this is applied in inclined fashion with respect to the tire circumferential direction CD within a prescribed region G in the tire circumferential direction CD so as to impart a feed pitch corresponding to the width dimension (approximately identical to the dimension in the long direction of orifice 45) of sealant 11, causing application to be such that there is a parallel application portion 12 and an inclined application portion 13. This application constitution is referred to as stepped application.

In the example shown in FIG. 4, taking end 2A on one side in the tire axial direction AD at tire inner surface 1A at tread 2 to be the left side, and taking end 2B on the other side to be the right side, stepped application of sealant 11 is carried out in band-like fashion from end 2A on said one side to end 2B on the other side. Taking one location in the tire circumferential direction CD at end 2A on said one side to be the application start location, application starting end 14 of sealant 11 is formed, application being carried out therefrom in parallel fashion with respect to the tire circumferential direction CD to form first circumferential pass 12A of the parallel application portion; and following one circumferential pass of application, nozzle 41 is made to move by an amount corresponding to one pitch toward the other end in the tire axial direction AD to form first instance 13A of the inclined application portion. Next, second circumferential pass 12B of the parallel application portion is formed, following which second instance 13B of the inclined application portion is formed, this being thereafter repeated until end 2B on the other side is reached. In addition, at end 2B on the other side, the final instance 12Y of the parallel application portion is formed, application finishing end 15 of sealant 11 being formed at the location where this meets the immediately preceding instance 13X of the inclined application portion to cause termination thereof.

Note that whereas at FIG. 4 the number of windings of band-like sealant 11, i.e., the number of circumferential passes in parallel application portion 12, is such that there are seven circumferential passes, the number of windings of sealant 11 may be chosen as appropriate in correspondence to width with which sealant 11 is applied and the width with which sealant layer 10 is formed. While description has been given above with respect to helical application and stepped application, there is no limitation with respect thereto, it being possible to employ any of various application methods.

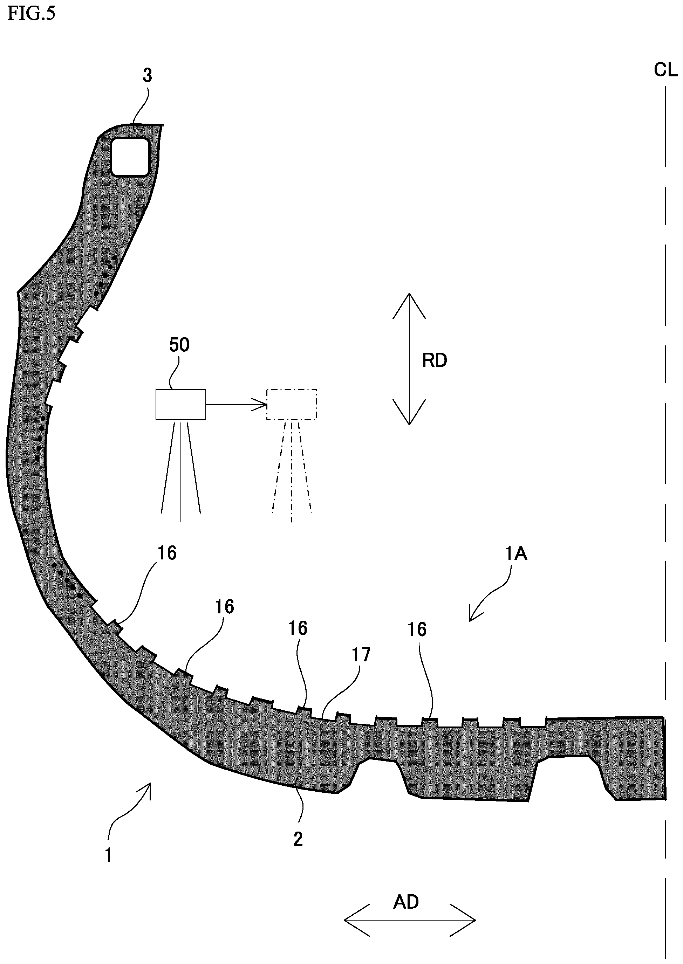

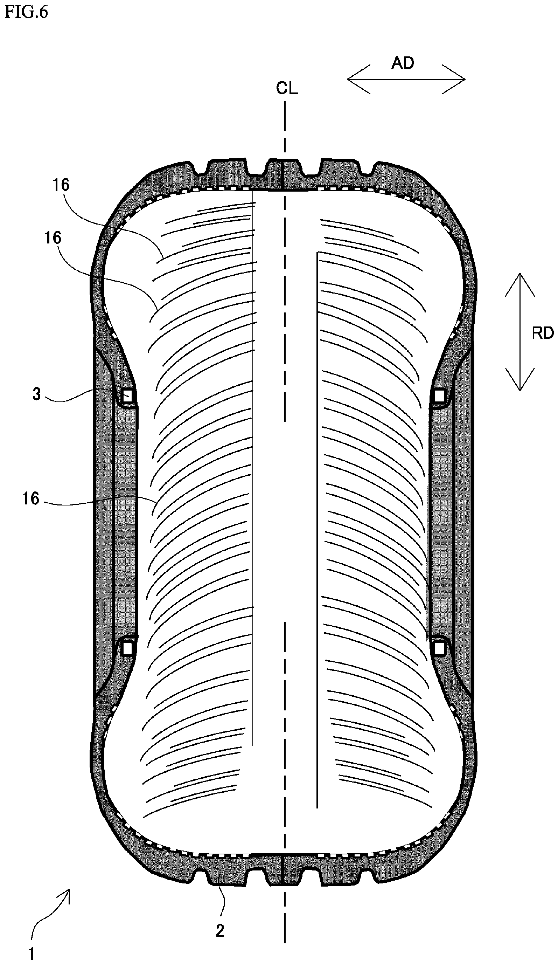

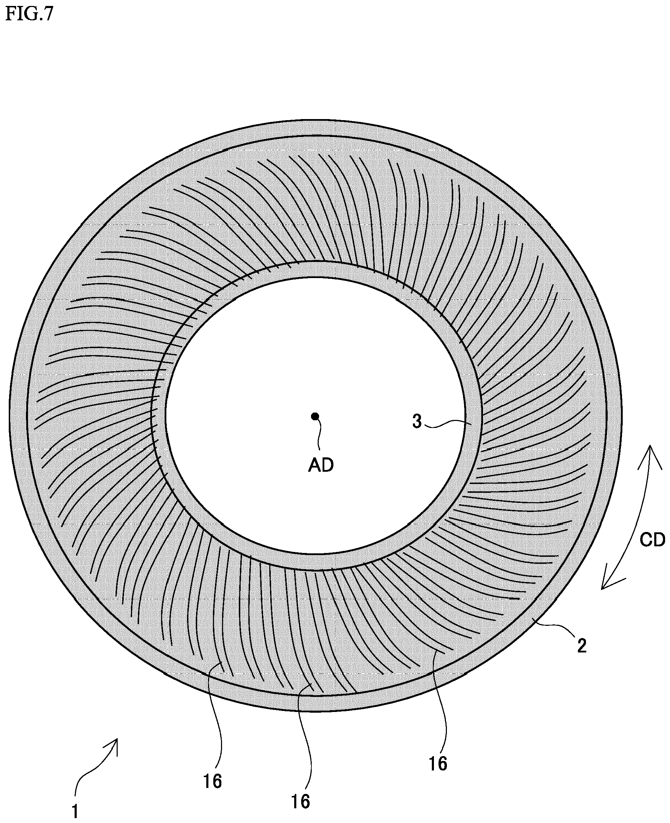

FIG. 5 is a tire meridional section showing the situation to only one side of the equatorial plane CL of tire 1. FIG. 6 is a drawing showing the situation that would exist when tire 1 is cut parallel to a plane intersected by the axial direction of tire 1. FIG. 7 is a drawing showing the situation that would exist when tire 1 is cut along equatorial plane CL of tire 1. As shown in FIG. 5, the shape of tire inner surface 1A is a shape such that inclination with respect to the tire axial direction AD at the central portion in the tire axial direction AD of tread 2 is small, and inclination with respect to the tire axial direction AD at the portion (the so-called buttress) toward the exterior in the tire axial direction AD of tread 2 is large. Furthermore, during vulcanization, tire 1 engages in an operation in which expansion of a bladder located at the interior of the tire causes tire 1 to be pressed on so as to be directed toward the die. At the surface of the bladder, there are linear protrusions for allowing escape of air. As shown in FIG. 6 and FIG. 7, the linear protrusions of the bladder cause formation of linear projections 16 (also called groove lines) at tire inner surface 1A. At tire inner surface 1A, linear projections 16, i.e., groove lines, are inclined with respect to both the tire axial direction AD and the tire circumferential direction CD, and it is often the case that they are formed with prescribed pitch therebetween. Moreover, linear projections 16, i.e., groove lines, cause formation of recesses 17.

As shown in FIG. 5, sensor 50 measures the shape of tire inner surface 1A. Sensor 50 of the present embodiment is a laser displacement gauge which measures the shape of tire inner surface 1A as it is made to move in the tire axial direction AD.

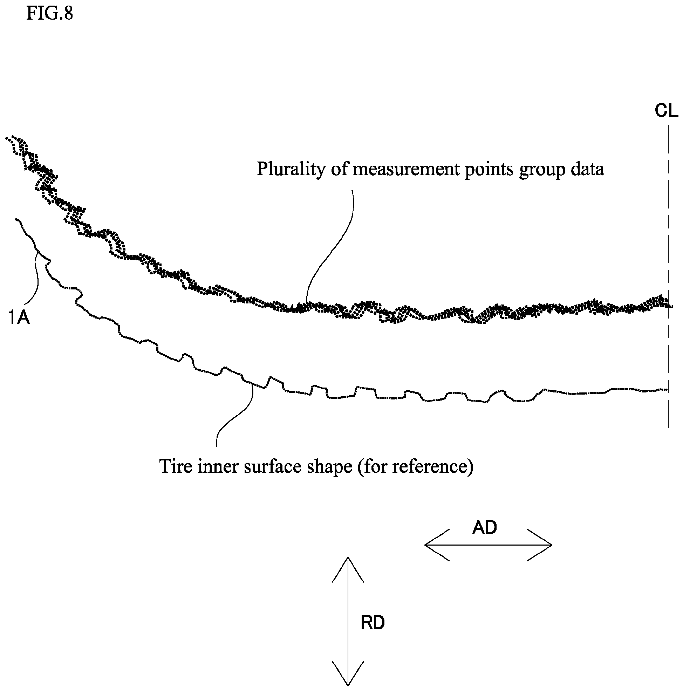

FIG. 8 is a drawing for explaining the situation related to a plurality of measurement points representing the shape of tire inner surface 1A as detected by sensor 50. At FIG. 8, measurement point group data obtained through use of a laser displacement gauge (sensor 50) is shown in the top portion of the drawing, and the shape of the tire inner surface 1A as actually measured is shown in the bottom portion of the drawing. The shape of tire inner surface 1A as actually measured which is shown in same drawing might be obtained using an approximate line or an approximate curve approximating the plurality of measurement points, and is shown here for reference so as to facilitate understanding. As shown in FIG. 8, the data obtained when sensor 50 is swept through the tire axial direction AD is a group of countless measurement points. The vertical direction in the drawing is the tire radial direction RD; the horizontal direction in the drawing is the tire axial direction AD. The coordinate in the tire axial direction is determined by the speed at which sensor 50 moves in the tire axial direction AD and by the sampling frequency of sensor 50. The respective measurement points indicate coordinates in the tire axial direction and coordinates in the tire radial direction, the plurality of measurement points representing the shape of tire inner surface 1A. Note, however, that while some measurement points among the plurality of measurement points may include measurement points which are outliers, abnormal values, and other such noise, these are removed through ordinary data processing that will not be described here.

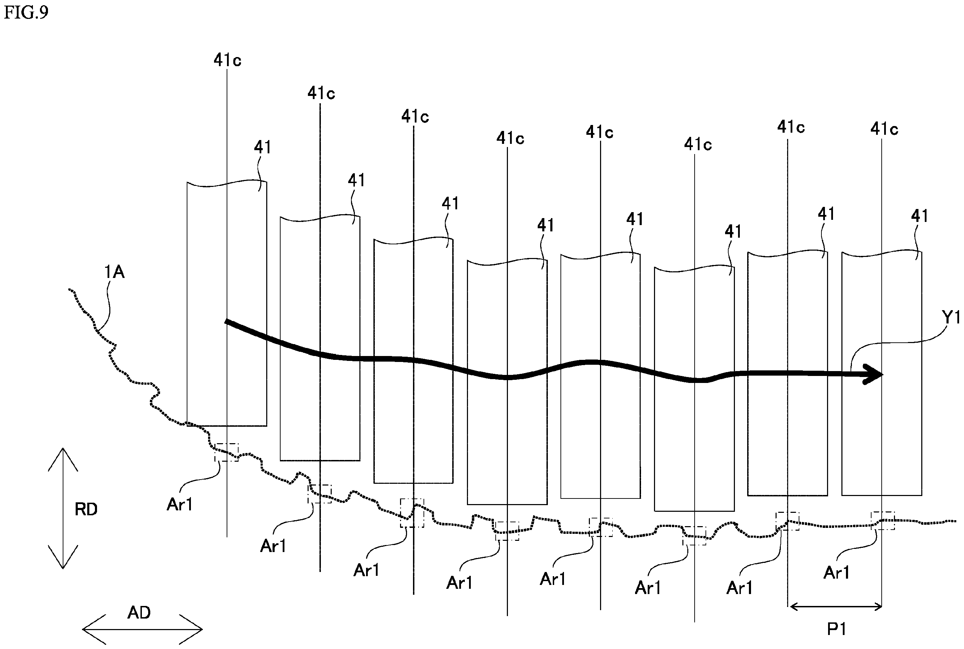

FIG. 9 is a drawing showing the positional relationship among nozzle 41, the pitch P1 at which nozzle 41 is fed, and the shape of tire inner surface 1A. At FIG. 9, arrow Y1 indicates the scanning direction of nozzle 41. As shown in same drawing, the pitch P1 at which nozzle 41 is fed is chosen so as to permit sealant 11 to be applied without occurrence of gaps therebetween, it being preferred that pitch P1 be identical or approximately identical to the dimension in the tire axial direction AD of orifice 45. This will make it possible for the location of nozzle 41 in the tire axial direction AD to be known. To identify the shape of tire inner surface 1A, a range (infinitesimal region Ar1) corresponding to the central portion in the tire axial direction AD of orifice 45 of nozzle 41 is chosen. While the dimension in the tire axial direction AD of this range (infinitesimal region Ar1) may be chosen to be any arbitrary value, in accordance with the present embodiment it is chosen to be 2 mm to 5 mm. Infinitesimal region Ar1 should be a region, the center of which is the centerline 41c in the tire axial direction AD of orifice 45 of nozzle 41, and which is large enough to contain a plurality of measurement points.

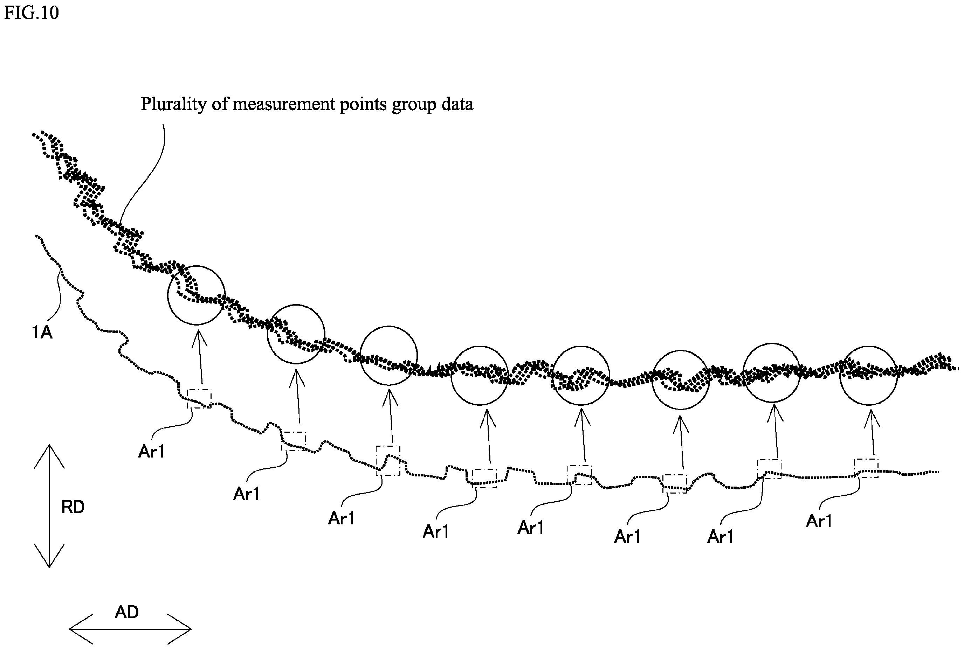

Next, as shown in FIG. 10, a plurality of measurement points contained within the infinitesimal region Ar1 which has been chosen are extracted from the plurality of measurement points group data. FIG. 10 is a drawing showing how a plurality of measurement points present within infinitesimal region Ar1 among the plurality of measurement points group data shown in FIG. 8 might be extracted. Pluralities of measurement points present within infinitesimal region Ar1 are indicated by circles. The shape of tire inner surface 1A is shown for reference. It is preferred that a known method be used to remove outliers, abnormal values, and other such noise from the extracted plurality of measurement points group.

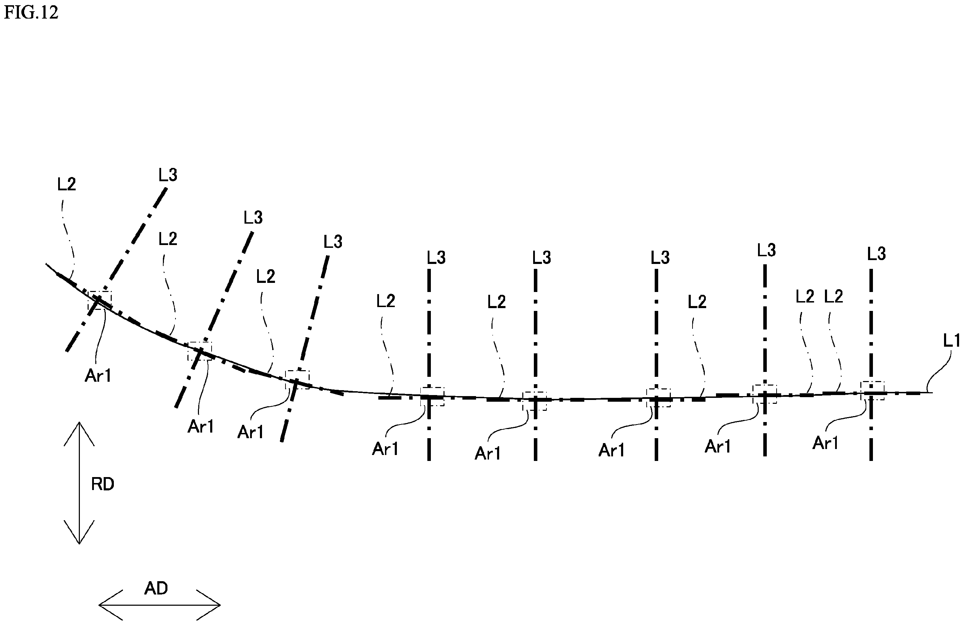

Next, a curve which is an approximation that is obtained by approximating the extracted plurality of measurement points present within infinitesimal region Ar1 is taken to be the shape of tire inner surface 1A. Whereas the least-squares method or the like might be employed to carry out linear approximation in accordance with the present embodiment, there is no limitation with respect thereto. For example, curvilinear approximation may be carried out. As shown in FIG. 12, orientations of nozzle 41 may be identified as lines L3 normal to tire inner surface 1A based on approximate line(s) (L1) which are obtained. Because linear approximation is carried out in the present embodiment, the normals L3 which are straight lines will be the orientations of nozzle 41. Where approximate curve(s) are used, the slope of the line L3 normal to that portion of the curvilinear approximation which is the curvilinear approximation at the intersection with centerline 41c of nozzle 41 should be determined. By so doing, it will be possible to determine the orientations (angles with respect to the tire radial direction RD) of nozzle 41 at the respective locations in the tire axial direction AD of nozzle 41 shown in FIG. 9. In addition, at the respective locations in the tire axial direction AD of nozzle 41 shown in FIG. 9, by controlling the orientation of nozzle 41 so as to be the orientation which is determined, it will be possible to vary the angle of nozzle 41 with respect to the tire radial direction RD in correspondence to the slope of tire inner surface 1A with respect to a meridional section of tire 1.

It so happens that there are situations in which a plurality of projections 16, i.e., groove lines, are formed on tire inner surface 1A as shown in FIGS. 5 through 8, and in which, as a result of having chosen to use an infinitesimal region Ar1 which is within the irregular portion formed by projections 16, it is not possible to obtain a desirable angle for nozzle 41. Furthermore, where, for example, control of nozzle 41 is carried out so as to cause distance D1 between the tip of nozzle 41 and tire inner surface 1A to be constant, there are situations in which, because the shapes of projections 16 are acquired, arrow Y1, i.e., the scanning line, is made to undulate as at arrow Y1 shown in FIG. 9, causing control of nozzle 41 to become unstable. The following is therefore carried out so as to take the groove lines into account and make it possible to obtain the original shape of tire inner surface 1A.

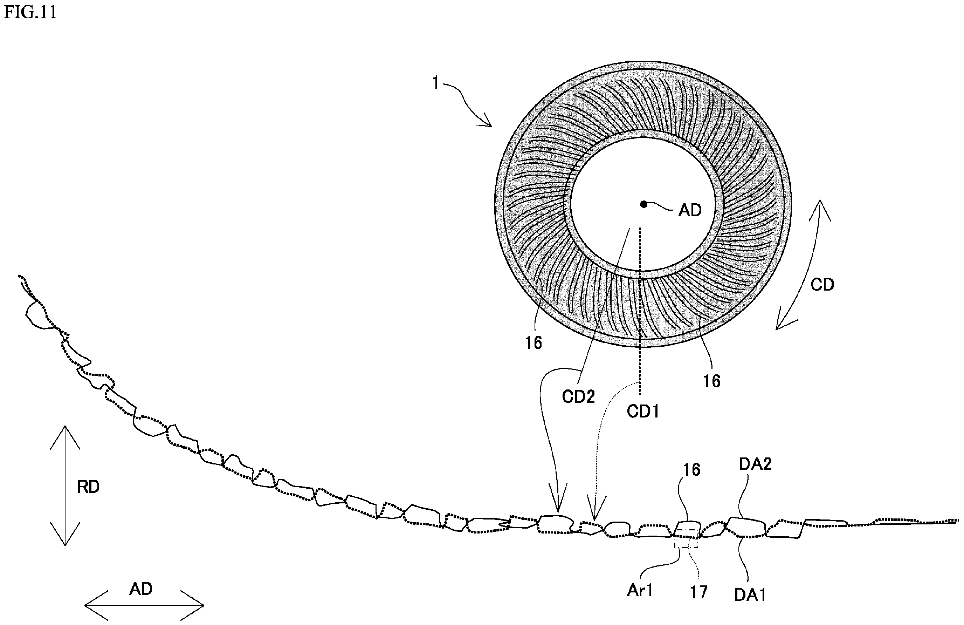

FIG. 11 is a drawing showing the shape of tire inner surface 1A as viewed in each of two tire meridional sections taken at mutually different locations (CD1, CD2) in the tire circumferential direction. Because projections 16, i.e., groove lines, extend helically in the tire circumferential direction CD, it will be possible by shifting the location (phase) in the tire circumferential direction and measuring the shape of tire inner surface 1A to convert the recess 17 formed by the linear projection 16 which corresponds to the groove line into a projection 16 that corresponds to the groove line. More specifically, at FIG. 11, first data set DA1 indicating the shape of tire inner surface 1A at first location CD1 in the tire circumferential direction is shown in broken line, and second data set DA2 indicating the shape of tire inner surface 1A at second location CD2 in the tire circumferential direction is shown in solid line. Infinitesimal region Ar1 shown in FIG. 11 is a recess 17 at first location CD1 in the tire circumferential direction, but is a projection 16 at which there is a groove line at the same location in the tire axial direction at second location CD2 in the tire circumferential direction. Therefore, the controller 60 determines whether or not that site (infinitesimal region Ar1) which is under evaluation within the shape of tire inner surface 1A at first location CD1 in the tire circumferential direction is a recess 17 as compared with the surrounding region. The surrounding region with which this is compared may be to both sides in the tire circumferential direction CD of the site (infinitesimal region Ar1) which is under evaluation. If it is determined that the site (infinitesimal region Ar1) under evaluation is a recess 17 as compared with the surrounding region, the controller 60 corrects the shape of tire inner surface 1A at the site (infinitesimal region Ar1) under evaluation using the shape of tire inner surface 1A at second location CD2 in the tire circumferential direction. As a specific example of how this might be done, instead of using first data set DA1 at first location CD1 in the tire circumferential direction for the plurality of measurement points data at infinitesimal region Ar1 shown in FIG. 11, second data set DA2 at second location CD2 in the tire circumferential direction might be substituted therefor.

FIG. 12 is a drawing for explaining the situation related to approximate line(s) (L1) representing tire inner surface 1A identified based on measurement data for tire inner surface 1A at which data substitution has been carried out. The data (measurement points group) indicating tire inner surface 1A on which substitution has been carried out is data for which the shape at all locations is such that there are no recesses 17. As shown in FIG. 12, using such data, smoothing processing might be carried out and a single tire inner surface curve L1 (shown in solid line) might be generated, tangents L2 (shown in single-dash chain line) at locations corresponding to centerline 41c of nozzle 41 might be determined, and normals L3 (shown in single-dash chain line) perpendicular to tangents L2 might be determined.

Furthermore, instead of generating a single tire inner surface curve L1, linear approximation might be carried out to determine approximate lines (L2) for pluralities of measurement points contained within respective infinitesimal regions Ar1, and normals L3 (shown in single-dash chain line) perpendicular to the approximate lines (L2) might be determined.

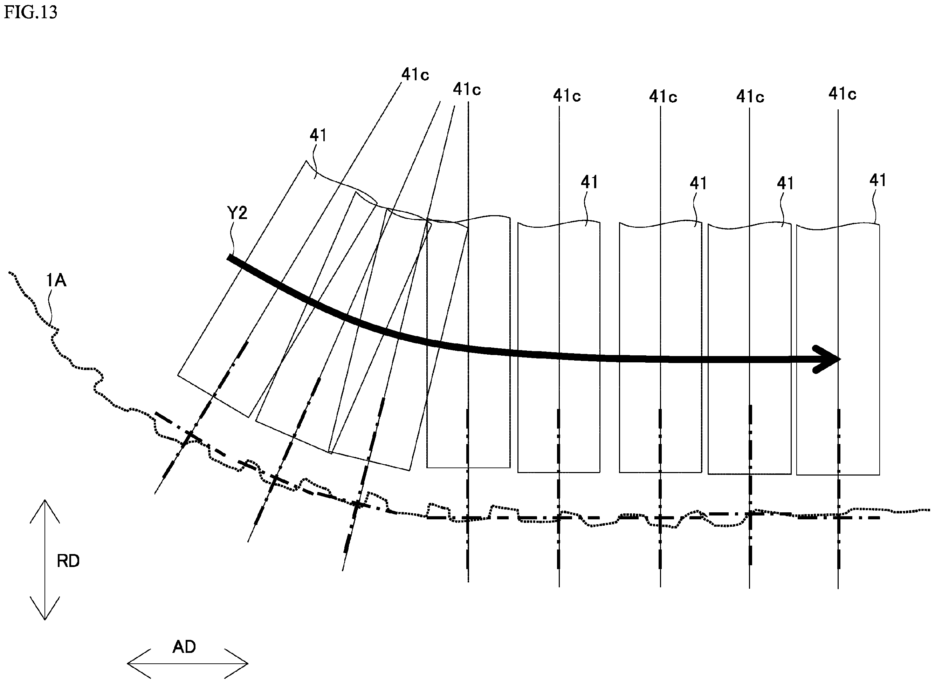

FIG. 13 is a drawing for explaining the situation related to operation of nozzle 41. As shown in FIG. 13, locations of nozzle 41 are determined by taking the locations (heights) in the tire radial direction RD of nozzle 41 to be locations which are removed by prescribed distances toward the interior in the tire radial direction RD from the shape (curve L1 or tangents L2 shown in FIG. 12) of tire inner surface 1A identified by respective infinitesimal regions Ar1. The orientations of nozzle 41 are parallel to the normals L3 defined by the respective infinitesimal regions Ar1. FIG. 13 is a schematic representation of a situation in which tire sectional shape is reconstituted in the form of a smoothed line from measurement data (a plurality of measurement points), and a scanning line Y2 which is made to trace that is obtained. Because the reconstituted shape of tire inner surface 1A is smooth, scanning line Y2 of nozzle 41 is also smooth, making it suited to control of operation of nozzle 41. As shown in FIG. 13, the angle of nozzle 41 with respect to the tire radial direction RD varies in correspondence to the shape (slope) of tire inner surface 1A, making it possible to appropriately apply sealant 11 thereto.

### Variations

(A) Whereas in accordance with the foregoing embodiment nozzle 41 is controlled so as to cause the standoff distance in the tire radial direction RD from tire inner surface 1A to be constant, there is no limitation with respect thereto. For example, the standoff distance in the tire radial direction RD from tire inner surface 1A need not be controlled so as to be constant.

As described above, a pneumatic tire manufacturing method may comprise the steps of measuring the shape of tire inner surface 1A, and forming a sealant layer 10 on the tire inner surface 1A by applying a band-like sealant 11 discharged from an orifice 45 of a nozzle 41 to the tire inner surface 1A while the nozzle 41 which is directed toward the tire inner surface 1A is caused to be in relative rotation about the axis of the tire 1; wherein the sealant 11 discharged from the orifice 45 of the nozzle 41 is applied to the tire inner surface 1A in such a manner that an angle of the nozzle 41 with respect to a tire radial direction RD is varied according to a slope of the tire inner surface 1A as viewed in a meridional section of the tire.

Because the angle of nozzle 41 is thus varied in correspondence to the slope of tire inner surface 1A as viewed in a tire meridional section, it is possible to cause sealant 11 to be applied in correspondence to the curved shape of tire inner surface 1A, making it possible to cause distance D1 with respect to tire inner surface 1A at both of the respective ends in the width direction of sealant 11 to be made uniform, and making it possible to suppress occurrence of gap(s) that might otherwise be produced between tire inner surface 1A and at least one of the two ends in the width direction of sealant 11.

In the context of a pneumatic tire manufacturing method as described at the foregoing [1], the measured shape of tire inner surface 1A may be represented by a plurality of measurement points indicating coordinates in the tire axial direction and in the tire radial direction, and the method may further including the steps of extracting multiple measurement points among the plurality of measurement points present within a range corresponding to a central portion in the tire axial direction AD of the orifice 45 of the nozzle 41, determining the angle of the nozzle 41 to be an angle which is based on a normal L3 of an approximate line obtained by approximating the extracted multiple measurement points, and controlling the nozzle 41 according to the determined angle.

Because an angle which is based on a line L3 normal to an approximate line approximating the plurality of measurement points is thus used, it is possible to obtain an angle for which noise resulting from the plurality of measurement points is reduced, and it is possible to carry out appropriate control of movement of nozzle 41.

In the context of a pneumatic tire manufacturing method as described at the foregoing [1] or [2], in the step of measuring the shape, measuring the shape at multiple locations in the tire circumferential direction CD in the tire meridional section, the multiple locations include at least a first location CD1 and a second location CD2 in the tire circumferential direction CD, the method further may including the step of determining whether a site which is under evaluation at the first location CD1 in the tire circumferential direction CD is recessed as compared with a region surrounding the site under the evaluation; and correcting the shape of the tire inner surface 1A at the site under the evaluation when it is determined that the site under evaluation is recessed as compared with the surrounding region to eliminate the recess 17 using a shape of the tire inner surface 1A at the second location CD2 in the tire circumferential direction CD.

The shape of tire inner surface 1A is such that projections 16, i.e., groove lines, are formed thereon with uniform spacing therebetween, recesses 17 being formed by projections 16. In accordance with such constitution, if it is determined that the site under evaluation is a recess 17 as compared with the surrounding region, the shape of tire inner surface 1A at second location CD2 in the tire circumferential direction, at which there is no recess 17, is used to carry out correction. Therefore, because the irregular shape due to the groove lines has been removed from the shape of tire inner surface 1A that is used when determining the angle of nozzle 41, it is possible to avoid employment of those slopes that are peculiar to the irregular shape due to the groove lines.

A pneumatic tire manufacturing apparatus may comprise support apparatus 30 which supports a tire, nozzle 41 which is capable of discharging a band-like sealant 11 from orifice 45, and sensor 50 which is capable of measuring shape, wherein he band-like sealant 11 is discharged from an orifice 45 of the nozzle 41 to the tire inner surface 1A while the nozzle 41 which is directe toward the tire inner surface 1A is caused to be in relative rotation about the axis of the tire1, the sensor 50 measure the shape of the tire inner surface 1A, and the sealant 11 discharged from the orifice 45 of the nozzle 41 is applied to the tire inner surface 1A in such a manner that an angle of the nozzle 41 with respect to a tire radial direction RD is varied according to a slope of the tire inner surface 1A as viewed in a meridional section of the tire.

While embodiments in accordance with the present disclosure have been described above with reference to the drawings, it should be understood that the specific constitution thereof is not limited to these embodiments. The scope of the present disclosure is as indicated by the claims and not merely as described at the foregoing embodiments, and moreover includes all variations within the scope of or equivalent in meaning to that which is recited in the claims.

Structure employed at any of the foregoing embodiment(s) may be employed as desired at any other embodiment(s). The specific constitution of the various components is not limited only to the foregoing embodiment(s) but admits of any number of variations without departing from the gist of the present disclosure.

For example, the order of execution of operations, procedures, steps, stages, etc. in the devices, systems, programs, and methods shown in the claims, specification, and drawings can be realized in any order, as long as the output of the previous process is not used in a subsequent process. Even if "first," "next," etc. are used for convenience in the description of the flow in the claims, specification, and drawings, it does not mean that it is essential to execute them in this order.

## Claims

1. A pneumatic tire manufacturing method comprising the steps of:
measuring a shape of a tire inner surface; and
forming a sealant layer on the tire inner surface by applying a band-like sealant discharged from an orifice of a nozzle to the tire inner surface while the nozzle which is directed toward the tire inner surface is caused to be in relative rotation about the axis of the tire;
wherein the sealant discharged from the orifice of the nozzle is applied to the tire inner surface in such a manner that an angle of the nozzle with respect to a tire radial direction is varied according to a slope of the tire inner surface as viewed in a meridional section of the tire.

2. The pneumatic tire manufacturing method according claim 1 wherein:
the measured shape of the tire inner surface to be represented by a plurality of measurement points indicating coordinates in a tire axial direction and in the tire radial direction;
the method further comprising the steps of
extracting multiple measurement points among the plurality of measurement points present within a range corresponding to a central portion in the tire axial direction of the orifice of the nozzle;
determining the angle of the nozzle to be an angle which is based on a normal of an approximate line obtained by approximating the extracted multiple measurement points; and
controlling the nozzle according to the determined angle.

3. The pneumatic tire manufacturing method according to claim 1 or 2 wherein:
in the step of measuring the shape, measuring the shape at multiple locations in the tire circumferential direction in the tire meridional section, the multiple locations include at least a first location and a second location in the tire circumferential direction;
the method further comprising the steps of
determining whether a site which is under evaluation at the first location in the tire circumferential direction is recessed as compared with a region surrounding the site under the evaluation; and
correcting the shape of the tire inner surface at the site under the evaluation when it is determined that the site under evaluation is recessed as compared with the surrounding region to eliminate the recess using a shape of the tire inner surface at the second location in the tire circumferential direction.

4. A pneumatic tire manufacturing apparatus comprising:
a support apparatus which supports a tire;
a nozzle which is capable of discharging a band-like sealant from an orifice; and
a sensor which is capable of measuring a shape;
wherein he band-like sealant is discharged from an orifice of the nozzle to the tire inner surface while the nozzle which is directed toward the tire inner surface is caused to be in relative rotation about the axis of the tire;
the sensor measure the shape of the tire inner surface; and
the sealant discharged from the orifice of the nozzle is applied to the tire inner surface in such a manner that an angle of the nozzle with respect to a tire radial direction is varied according to a slope of the tire inner surface as viewed in a meridional section of the tire.

5. The pneumatic tire manufacturing apparatus according claim 4 wherein
the shape of the tire inner surface measured by the sensor is represented by a plurality of measurement points indicating coordinates in a tire axial direction and in the tire radial direction;
multiple measurement points among the plurality of measurement points present within a range corresponding to a central portion in the tire axial direction of the orifice of the nozzle is extracted;
the angle of the nozzle is determined to be an angle which is based on a normal of an approximate line obtained by approximating the extracted multiple measurement points; and
the nozzle is controlled according to the determined angle.

6. The pneumatic tire manufacturing apparatus according claim 4 or 5 wherein
the sensor measures the shape at multiple locations in the tire circumferential direction in the tire meridional section, the multiple locations include at least a first location and a second location in the tire circumferential direction;
the pneumatic tire manufacturing apparatus further comprising
a controller which determines whether a site which is under evaluation at the first location in the tire circumferential direction is recessed as compared with a region surrounding the site under the evaluation and corrects the shape of the tire inner surface at the site under the evaluation when it is determined that the site under evaluation is recessed as compared with the surrounding region to eliminate the recess using a shape of the tire inner surface at the second location in the tire circumferential direction.
